(19) Europäisches Patentamt
European Patent Office
Office européen des brevets

(11) EP 4 671 001 A1

(12) **EUROPEAN PATENT APPLICATION**

(43) Date of publication:
**31.12.2025 Bulletin 2026/01**

(21) Application number: **25182039.5**

(22) Date of filing: **11.06.2025**

(51) International Patent Classification (IPC):
***B60C 1/00*** *(2006.01)* ***C08L 9/06*** *(2006.01)*
***C08K 5/55*** *(2006.01)*

(52) Cooperative Patent Classification (CPC):
(C-Sets available)
**C08C 19/02; B60C 1/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.06.2024 JP 2024103389**

(71) Applicant: **Sumitomo Rubber Industries, Ltd.**
**Kobe-shi, Hyogo 651-0072 (JP)**

(72) Inventor: **SAITO, Ikumi**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **TIRE**

(57) Provided is a tire comprising at least one rubber member composed of a cross-linked rubber comprising a rubber component and a cross-linking agent, wherein the cross-linked rubber has a boron atom-containing group, the rubber component comprises a polymer comprising - CH=CH- unit, $-CH_2-CH(-CH=CH_2)-$ unit, and $-CH_2-CHPh-$ unit, a content of the polymer in the rubber component is 50% by mass or more, and the tire satisfies the following inequalities, where B represents a boron content in the cross-linked rubber, Y represents a content of $-CH_2-CH(-CH=CH_2)-$ unit in the rubber component, and T represents a thickness of the rubber member:

$$(1)\ Y<6.0,$$

$$(2)\ B/(Y\times T)\times 10^4>1.$$

EP 4 671 001 A1

(52) Cooperative Patent Classification (CPC): (Cont.)

C-Sets
**C08L 9/00, C08L 9/06, C08L 91/06, C08L 45/00, C08K 5/55, C08K 3/04, C08K 5/18, C08K 3/22, C08K 5/09, C08K 5/315, C08K 5/47, C08K 5/47, C08K 5/31, C08K 3/06;**
**C08L 9/06, C08L 9/00, C08L 7/00, C08L 91/06, C08L 45/00, C08K 5/55, C08K 3/04, C08K 5/18, C08K 3/22, C08K 5/09, C08K 5/315, C08K 5/47, C08K 5/47, C08K 5/31, C08K 3/06;**
**C08L 9/06, C08L 9/00, C08L 91/06, C08L 45/00, C08K 5/55, C08K 3/04, C08K 5/18, C08K 3/22, C08K 5/09, C08K 5/315, C08K 5/47, C08K 5/47, C08K 5/31, C08K 3/06;**
**C08L 15/00, C08L 9/00, C08L 91/06, C08L 45/00, C08K 5/55, C08K 3/04, C08K 5/18, C08K 3/22, C08K 5/09, C08K 5/315, C08K 5/47, C08K 5/47, C08K 5/31, C08K 3/06;**
C08F 236/06, C08F 212/08

## Description

TECHNICAL FIELD

The present invention relates to a tire.

BACKGROUND OF THE INVENTION

From the viewpoints of environmental issues and resource conservation, reuse of a tire has been considered, and as part of this effort, a cross-linked rubber, which is more easily reused than a vulcanized rubber, has been developed. WO 2023/013333 describes an elastomer that is cross-linked with a diboronic acid ester compound, which is easily decrosslinked and considered to be able to be used for a tire, a seismic isolation rubber, and various hoses.

SUMMARY OF THE INVENTION

It is an object of the present invention to provide a tire having improved durability, the tire comprising at least one rubber member composed of a cross-linked rubber having a boron atom-containing group.

The present invention relates to a tire below:

a tire comprising at least one rubber member composed of a cross-linked rubber comprising a rubber component and a cross-linking agent,
wherein the cross-linked rubber has a boron atom-containing group,
wherein the rubber component comprises a polymer comprising, as repeating units, -CH=CH- unit, $-CH_2-CH(-CH=CH_2)-$ unit, and $-CH_2-CHPh-$ unit (provided that Ph represents a phenyl group),
wherein a content of the polymer in the rubber component is 50% by mass or more, and
wherein the tire simultaneously satisfies the following relational inequalities (1) and (2), where B represents a boron content, in parts by mass, in the cross-linked rubber based on 100 parts by mass of the rubber component, Y represents a content, in parts by mass, of $-CH_2-CH(-CH=CH_2)-$ unit in the rubber component based on 100 parts by mass of the rubber component, and T represents a thickness, in mm, of the rubber member:

$$(1)\ Y<6.0,$$

$$(2)\ B/(Y\times T)\times 10^4>1.$$

According to the present invention, a tire can be provided which has improved durability, the tire comprising at least one rubber member composed of a cross-linked rubber having a boron atom-containing group.

BRIEF DESCRIPTION OF THE DRAWINGS

FIG. 1 is a schematic view showing a part of a cross section (upper right part of the cross section) taken along a plane including a tire rotation axis of a tire relating to one embodiment of the present invention.

DETAILED DESCRIPTION

The tire of the present embodiment is a tire comprising at least one rubber member composed of a cross-linked rubber comprising a rubber component and a cross-linking agent, wherein the cross-linked rubber has a boron atom-containing group, wherein the rubber component comprises a polymer comprising, as repeating units, -CH=CH- unit, $-CH_2-CH(-CH=CH_2)-$unit, and $-CH_2-CHPh-$ unit (provided that Ph represents a phenyl group), wherein a content of the polymer in the rubber component is 50% by mass or more, and wherein the tire simultaneously satisfies the following relational inequalities (1) and (2), where B represents a boron content, in parts by mass, in the cross-linked rubber based on 100 parts by mass of the rubber component, Y represents a content, in parts by mass, of $-CH_2-CH(-CH=CH_2)-$ unit in the rubber component based on 100 parts by mass of the rubber component, and T represents a thickness, in mm, of the rubber member:

$$(1)\ Y<6.0,$$

$$(2)\ B/(Y\times T)\times 10^4>1.$$

Although it is not intended to be bound by a theory, the following can be considered as a mechanism for improving durability in the tire comprising the rubber member composed of the cross-linked rubber having the boron atom-containing group of the present embodiment. That is, (a) when 50% by mass or more of a polymer having a predetermined repeating unit is compounded in 100% by mass of the rubber component, a cross-linked structure with a double-bond part of the rubber component and the boron atom-containing group is sufficiently formed, which is considered to contribute to durability of the tire. Moreover, (b) when the rubber component comprises a large amount of $-CH_2-CH(-CH=CH_2)-$ unit, gelation occurs during heat molding, which affects durability of the tire. However, when an amount of $-CH_2-CH(-CH=CH_2)-$ unit is less than 5 parts by mass, gelation during heat molding is suppressed, which is considered to contribute to improvement in durability of the tire. Furthermore, (c) when a ratio of the boron content to a vinyl amount is set to a certain value or more relative to a thickness of the member, a sufficient cross-linked structure is formed, which is considered to enable improvement of reinforcing property. It is considered that, with cooperation of these (a) to (c), an excellent effect of improving durability of the tire can be obtained.

Moreover, the cross-linked rubber that is cross-linked with the boron atom-containing group can be easily decrosslinked by a transesterification reaction. Therefore, the tire relating to the present embodiment can be reused more easily than a tire produced using a typical vulcanized rubber.

The thickness T of the rubber member composed of the cross-linked rubber is preferably 5 mm or less.

The rubber component preferably further comprises an isoprene-based rubber.

The right side in the inequality (1) is preferably 5.0, more preferably 4.2.

The tire that satisfies the inequality (1) under a stricter condition is considered to further improve in durability.

The right side in the inequality (2) is preferably 100. Moreover, a value on the left side in the inequality (2) is preferably less than 5000.

The tire that satisfies the inequality (2) under a stricter condition is considered to further improve in durability.

The polymer preferably further comprises $-CH_2-CH_2-CH_2-CH_2-$ unit and/or $-CH_2-CH(-CH_2-CH_3)-$ unit.

The cross-linked rubber preferably has a cross-linking site bonded via boron-oxygen bond.

The cross-linking site preferably comprises a group having a diboronic acid ester skeleton unit.

The polymer is preferably a modified polymer modified with a complex of a nitrogen-containing aromatic compound and a borane compound.

The modified polymer modified with the complex of the nitrogen-containing aromatic compound and the borane compound strongly interacts with a filler such as carbon black, silica, and the like, so that reinforcing strength is improved, which is considered to contribute to improvement of durability. Moreover, it is considered that the modified polymer modified with the complex of the nitrogen-containing aromatic compound and the borane compound may form cross-linking sites via boron atoms with modifying groups thereof by bonding or reacting with each other, depending on types of the modifying groups, and such a case is considered to contribute to improvement of reinforcing strength and durability.

The nitrogen-containing aromatic compound is preferably at least one selected from the group consisting of pyridine, quinoxaline, pyrrole, pyrazine, pyrimidine, pyridazine, thiazole, oxazole, imidazole, pyrazole, isoxazole, isothiazole, triazole, furazan, oxadithiazole, thiadiazole, dioxazole, and dithiazole.

The rubber member is preferably one selected from a cap tread, a base tread, a sidewall, a clinch apex, a wing, and an inner liner.

In the present specification, numerical values of upper limits and lower limits relating to "or more", "or less", and "to" for descriptions of numerical ranges are numerical values that can be arbitrarily combined, and additionally, numerical values in Examples can be combined with the upper limits and the lower limits. Moreover, when a numerical range is specified by using "to", it means to include numerical values of both ends, unless otherwise specified. Furthermore, in the present specification, the numerical range shown to include the values of both ends is interpreted as simultaneously showing a numerical range not including the value of one end among the values of both ends, and further, a numerical range not including both values of both ends, unless contrary to the purpose of the present invention.

<Definitions>

A "standardized state" is a state where a tire is rim-assembled on a standardized rim and air under a standardized internal pressure is filled, and no load is applied.

A "dimension of each part of a tire" is, for one appearing on the outer surface of the tire, a value specified in a standardized condition unless otherwise specified, while it is, for one present inside the tire or on a tire cutting surface, a value specified in a condition where, for example, the tire is cut on a plane including a tire rotation axis and the cut tire piece is held to a rim width of a standardized rim.

A "standardized rim" is a rim in a standard system including a standard on which the tire is based, defined by the standard for each tire. For example, the "standardized rim" refers to a standard rim of an applicable size described in

"JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity WL calculated separately is defined as a standardized load.

The "maximum load capacity $W_L$" is calculated by the following equations. Wherein "V" is a virtual volume, in mm3, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt it is a value obtained by excluding, if any, patterns or characters on the side surface of the tire. Besides, the "maximum load capacity" has the same meaning as the above-described standardized load.

$$W_L = 0.000011 \times V + 175$$

$$V = \{(Dt/2)^2 - (Dt/2 - Ht)^2\} \times \pi \times Wt$$

A "hydrogenated styrene-butadiene rubber" refers to a copolymer of styrene and 1,3-butadiene, that is, a hydrogenated product of a styrene-butadiene rubber (SBR). Moreover, the hydrogenated styrene-butadiene rubber includes a hydrogenated product of a modified styrene-butadiene rubber modified by the method described below (modified SBR). A hydrogenation rate of the hydrogenated styrene-butadiene rubber is a value calculated from each integral value of a double bond-derived peak by $^1$H-NMR according to the following equation. In the present specification, a hydrogenation rate means a hydrogenation rate of double bonds.

$$(\text{Hydrogenation rate [\%]}) = \{(AB)/A\} \times 100$$

A: Integral value of double bond peak before hydrogenation
B: Integral value of double bond peak after hydrogenation

A "thickness of a rubber member" is the maximum thickness, in mm, of the rubber member on a cross section of a tire taken along a plane including a tire rotation axis. The maximum thickness is measured by preparing a tire piece obtained by cutting the tire along the plane including the tire rotation axis, with a space between beads of the tire piece held to a standardized rim width. The thickness shall be an average value of respective thicknesses measured at five locations by rotating the tire by 72°.

When thickness of a rubber member is substantially uniform on the cross section of the tire, a thickness at a predetermined location shall be the thickness of the rubber member. That is, (1) for members whose thickness in a tire radial direction can be recognized on a tire center line, the thickness is regarded as the thickness of the member, and (2) among rubber members whose thickness cannot be recognized as described in (1), for members whose thickness can be recognized at the tire maximum width position in a tire rotation axis direction, the thickness is regarded as the thickness of the member. Examples of the rubber member in (1) include a cap tread, a base tread, an inner liner, and the like. Moreover,

examples of the rubber member in (2) include a sidewall and the like.

On the other hand, when thickness of a rubber member varies on the cross section of the tire, a thickness is determined taking into consideration a normal thickness recognition method for the rubber members. Examples of such rubber members include a clinch apex, a wing, and the like.

A "thickness of a cap tread" is a thickness in a tire radial direction on a tire center line on a cross section of a tire taken along a plane including a tire rotation axis. It corresponds to T1 in FIG. 1.

A "thickness of a base tread" is a thickness in a tire radial direction on a tire center line on a cross section of a tire taken along a plane including a tire rotation axis. It corresponds to T2 in FIG. 1.

A "thickness of an inner liner" is a thickness in a tire radial direction on a tire center line on a cross section of a tire taken along a plane including a tire rotation axis. It corresponds to T3 in FIG. 1.

A "thickness of a sidewall" is a thickness at the tire maximum width position in a tire rotation axis direction on a cross section of a tire taken along a plane including a tire rotational axis. It corresponds to T4 in FIG. 1.

A "thickness of a clinch apex" is a thickness measured along a normal line of a main body of a carcass that passes through a point where a sidewall and the clinch apex come into contact with each other on an outer surface of a tire. In FIG. 1, P1 is a point where the sidewall and the clinch come into contact with each other on the outer surface of the tire, L1 is a normal line of the main body of the carcass that passes through the point P1, and T5 is a thickness of the clinch as measured along the normal line L1.

A "thickness of a wing" is a thickness measured along a normal line of an outer surface of a tire that passes through a point where a contour line of a tread on an outer side in a tire width direction intersects with a contour line of a sidewall on an outer side in a tire radial direction. In FIG. 1, P2 is a point where the contour line of the tread on the outer side in the tire width direction intersects with the contour line of the sidewall on the outer side in the tire radial direction, L2 is a normal line of the outer surface of the tire that passes through the point P2, and T6 is a thickness of the wing as measured along the normal line L2.

A "plasticizing agent" is a material that imparts plasticity to the rubber component, and has a concept that includes both a plasticizing agent in liquid (in a liquid state) at 25°C and a plasticizing agent that is solid at 25°C. Examples of the plasticizing agent include, resin, oil, a liquid rubber, an ester-based plasticizing agent, and the like. A "content of a plasticizing agent" also includes an amount of a plasticizing agent in a rubber component extended by the plasticizing agent.

<Measuring method>

A "styrene content" and a "content of $-CH_2-CHPh-$ unit" are calculated by pyrolysis gas chromatography or NMR measurement ($^1H$-NMR or $^{13}C$-NMR). Unlike physical property values such as a complex elastic modulus (E*) and the like, an amount of component such as the "styrene content" has a true value that is independent of a measuring method, so it is preferable to use a measuring method with as high accuracy as possible. Besides, in the present specification, "pyrolysis gas chromatography" refers to a method of heating a sample in a pyrolyzer, separating individual components contained in gas phase generated by this heating using a separation column, and analyzing each separated component.

A "vinyl content (1,2-bond butadiene unit amount)" and a "content of $-CH_2-CH(-CH=CH_2)-$ unit" are calculated by pyrolysis gas chromatography or NMR measurement ($^1H$-NMR or $^{13}C$-NMR). Similarly with the "styrene content", the "vinyl content" has a true value that is independent of a measuring method, so it is preferable to use a measuring method with as high accuracy as possible.

A "cis content (cis-1,4-bond butadiene unit amount)" and a "content of -CH=CH- unit" are values measured by infrared absorption spectrometry or NMR measurement ($^1H$-NMR or $^{13}C$-NMR) according to JIS K 6239-2:2017 and are applied to, for example, a rubber component having a repeating unit derived from butadiene such as a BR and the like. Similarly with the "styrene content", the "cis content" has a true value that is independent of a measuring method, so it is preferable to use a measuring method with as high accuracy as possible.

An "ash content of a recovered carbon black" is measured by a thermal weight measurement method according to JIS K 6226-2:2003.

An "average primary particle size of carbon black" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of $\{4 \times (\text{area of particle})/\pi\}$) is calculated from the microscope image to be defined as a particle size. The definitions are applied to carbon black comprising a recovered carbon black.

A "nitrogen adsorption specific surface area ($N_2SA$) of carbon black" is measured according to JIS K 6217-2:2017.

A "nitrogen adsorption specific surface area ($N_2SA$) of silica" is measured by the BET method according to ASTM D3037-93.

A "glass transition temperature Tg" is a value calculated by differential scanning calorimetry (DSC) in accordance

with JIS K 7121 and is applied to, for example, an SBR. For example, when the SBR comprises an extending oil, measurement is performed on a sample obtained after removing the extending oil with acetone in accordance with JIS K 6229.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

<Tire>

The tire relating to the present embodiment will be described below with reference to the drawings as appropriate. However, the drawings are merely examples for explanation.

The tire relating to the present embodiment is a tire comprising at least one rubber member composed of a cross-linked rubber comprising a rubber component and a cross-linking agent, wherein the cross-linked rubber has a boron atom-containing group, wherein the rubber component comprises a polymer comprising, as repeating units, -CH=CH- unit, $-CH_2-CH(-CH=CH_2)-$ unit, and $-CH_2-CHPh-$ unit (provided that Ph represents a phenyl group), wherein a content of the polymer in the rubber component is 50% by mass or more, and wherein the tire simultaneously satisfies the following relational inequalities (1) and (2), where B represents a boron content, in parts by mass, in the cross-linked rubber based on 100 parts by mass of the rubber component, Y represents a content, in parts by mass, of $-CH_2-CH(-CH=CH_2)-$unit in the rubber component based on 100 parts by mass of the rubber component, and T represents a thickness, in mm, of the rubber member:

$$(1)\ Y<6.0,$$

$$(2)\ B/(Y\times T)\times 10^4>1.$$

The rubber member composed of the specified cross-linked rubber is not particularly limited, examples of which can include a variety of rubber members. Specifically, examples of the rubber member include a cap tread, a base tread, a sidewall, a clinch apex, a wing, an inner liner, and the like.

FIG. 1 is a schematic view showing a part of a cross section (upper right part of the cross section) of a tire relating to the present embodiment, taken along a plane including a tire rotation axis. FIG. 1 shows a cap tread 1, a base tread 2, an inner liner 3, a sidewall 4, a clinch apex 5, and a wing 6. Moreover, a thickness of the cap tread 1 is denoted by T1, a thickness of the base tread 2 is denoted by T2, a thickness of the inner liner 3 is denoted by T3, a thickness of the sidewall 4 is denoted by T4, a thickness of the clinch apex 5 is denoted by T5, and a thickness of the wing 6 is denoted by T6.

(Inequality (1))

In the inequality (1), a value on the right side is preferably 5.0, more preferably 4.5, further preferably 4.2, further preferably 4.0, further preferably 3.5, further preferably 3.0, further preferably 2.5, further preferably 2.0, further preferably 1.5. On the other hand, Y is preferably 0.10 or more, more preferably 0.20 or more, further preferably 0.30 or more, further preferably 0.50 or more, further preferably 0.70 or more, further preferably 0.75 or more, further preferably 0.80 or more, from the viewpoint of durability.

(Inequality (2))

The right side in the inequality (2) is preferably 10, more preferably 100, further preferably 400, further preferably 800, further preferably 1000, further preferably 2000, further preferably 4000. An upper limit of the left side in the inequality (2) is not particularly limited from the viewpoint of the effects of the present invention, but it is usually 70000, preferably 65000, more preferably 60000, further preferably 50000, particularly preferably 5000. The inequality (2) specifies a relation between a ratio (B/Y) of the boron content to the content of $-CH_2-CH(-CH=CH_2)-$ unit in the rubber component and a thickness T of a member, and when it satisfies the specified relation, a tire having improved durability can be obtained.

A value of T is preferably 0.5 mm or more, more preferably 0.7 mm or more, further preferably 1 mm or more. On the other hand, the value is preferably 10 mm or less, more preferably 9 mm or less, further preferably 8 mm or less.

The value of T may vary depending on a type of a rubber member. In a case of a cap tread, for example, a thickness of the cap tread is preferably 3 mm or more, more preferably 4 mm or more, further preferably 5 mm or more. An upper limit of the value is, but not particularly limited to, preferably 10 mm or less, more preferably less than 10 mm, further preferably 9 mm or less, further preferably 8 mm or less.

In a case of an inner liner, for example, a thickness of the inner liner is preferably 0.5 mm or more, more preferably 0.7 mm or more, further preferably 1 mm or more. An upper limit of the value is, but not particularly limited to, preferably 2.5 mm or less, more preferably 2 mm or less, further preferably 1.5 mm or less.
In a case of a sidewall, for example, a thickness of the sidewall is preferably 2 mm or more, more preferably 2.5 mm or more, further preferably 3 mm or more. An upper limit of the value is, but not particularly limited to, preferably 6 mm or less, more preferably 5.5 mm or less, further preferably 4 mm or less.
In a case of a wing, for example, a thickness of the wings is preferably 3 mm or more, more preferably 3.5 mm or more, further preferably 4 mm or more. An upper limit of the value is, but not particularly limited to, preferably 5 mm or less, more preferably 4.5 mm or less, further preferably 4.3 mm or less.
In a case of a clinch apex, for example, a thickness of the clinch apex is preferably 4 mm or more, more preferably 4.5 mm or more, further preferably 5 mm or more. An upper limit of the value is, but not particularly limited to, preferably 8 mm or less, more preferably 7 mm or less, further preferably 6 mm or less.

<Cross-linked rubber>

A cross-linked rubber constituting a rubber member will be described below. In the present embodiment, examples of the rubber member can include various rubber members such as a cap tread, a base tread, a band, a belt, a carcass, an inner liner, a sidewall, a clinch apex, a wing, a topping rubber that covers a cord, and the like. Among these rubber members, one selected from a cap tread, a base tread, a sidewall, a clinch apex, a wing, and an inner liner is preferable, and particularly, a cap tread, a sidewall, and the like are preferable as rubber members.
Any of cross-linked rubbers constituting these rubber members comprises a rubber component and a cross-linking agent, and the cross-linked rubber has a boron atom-containing group.

[Cross-linked rubber constituting cap tread]

<Rubber component>

A cross-linked rubber constituting a cap tread comprises, as a rubber component, a polymer comprising $-CH=CH-$ unit, $-CH_2-CH(-CH=CH_2)-$ unit, and $-CH_2-CHPh-$ unit, as repeating units (provided that Ph represents a phenyl group). Examples of such a polymer can include, for example, a styrene-butadiene rubber (SBR) or a combination of an SBR and a butadiene rubber (BR). Moreover, such a polymer may be modified with a borane complex (e.g., a complex of a nitrogen-containing aromatic compound and a borane compound). The polymer can comprise rubber components other than the SBR and the BR, and examples of such rubber components include diene-based rubbers such as an isoprene-based rubber (IR-based rubber), a styrene-isoprene-butadiene rubber (SIBR), a chloroprene rubber (CR), an acrylonitrile-butadiene rubber (NBR), and the like, and non-diene-based rubbers such as a butyl-based rubber, an ethylene propylene rubber, a polynorbornene rubber, a silicone rubber, a chlorinated polyethylene rubber, a fluororubber (FKM), an acrylic rubber (ACM), a hydrin rubber, and the like. These diene-based rubbers or non-diene-based rubbers may be used alone, or two or more thereof may be used in combination. Among them, diene-based rubbers are preferable. The rubber component may be one consisting of an SBR, may by one consisting of an SBR and a BR, or may be one consisting of an SBR, a BR, and an IR-based rubber. Furthermore, the polymer may further comprise $-CH_2-CH_2-CH_2-CH_2-$ unit and/or $-CH_2-CH(-CH_2-CH_3)-$ unit. In this case, examples of such a polymer include one comprising a hydrogenated SBR described below.

(SBR)

The styrene-butadiene rubber (SBR) is not particularly limited, examples of which include, for example, unmodified emulsion-polymerized styrene-butadiene rubber (E-SBR) and unmodified solution-polymerized styrene-butadiene rubber (S-SBR), as well as modified SBRs obtained by modifying them, such as a modified emulsion-polymerized styrene-butadiene rubber (modified E-SBR) and a modified solution-polymerized styrene-butadiene rubber (modified S-SBR). Examples of the modified SBR include a modified SBR modified at its terminal and/or main chain, a modified SBR coupled with tin, a silicon compound, etc. (a modified SBR of condensate or having a branched structure, etc.), and the like. Moreover, the modified SBR also includes an SBR modified with a borane complex mentioned below. Furthermore, hydrogenated ones of these SBRs (hydrogenated SBRs) and the like can also be used. Moreover, as SBRs, there are oil-extended type SBRs, in which an extending oil is added to adjust flexibility, and non-oil-extended type SBRs, in which no extending oil is added, both of which can be used. As such SBRs, for example, those manufactured by JSR Corporation, Asahi Kasei Chemicals Co., Ltd., Zeon Corporation, ZS Elastomer Co., Ltd., etc. can be used. An SBR can be used alone, or two or more thereof can be used in combination.
A styrene content of an SBR is preferably greater than 10% by mass, more preferably greater than 15% by mass,

further preferably greater than 20% by mass. Moreover, the styrene content is preferably less than 60% by mass, more preferably less than 55% by mass, further preferably less than 50% by mass, from the viewpoint of the effects. Besides, the styrene content of the SBR and the content of $-CH_2-CHPh-$ unit are values measured by the above-described method.

A vinyl content (1,2-bond butadiene unit amount) of an SBR is preferably greater than 10 mol%, more preferably greater than 15 mol%, further preferably greater than 17 mol%. Moreover, the vinyl content is preferably less than 80 mol%, more preferably less than 70 mol%, further preferably less than 60 mol%. Besides, the vinyl content of the SBR and the content of $-CH_2-CH$ $(-CH=CH_2)-$ unit are values measured by the above-described method.

In the hydrogenated SBR, a hydrogenation rate of the SBR is preferably 40 mol% or more, more preferably 50 mol% or more, further preferably 60 mol% or more, particularly preferably 70 mol% or more. Moreover, the hydrogenation rate is preferably 100 mol% or less, more preferably 99 mol% or less, further preferably 98 mol% or less, particularly preferably 90 mol% or less. A hydrogenation method and a reaction condition are not particularly limited, and hydrogenation may be performed by a known method under a known condition. Generally, hydrogenation is performed at 20 to 150°C, under a hydrogen pressure of 0.1 to 10 MPa, in presence of a hydrogenation catalyst. Other methods and conditions for production are not particularly limited, and for example, the contents described in WO 2016/039005 can be applied thereto. Moreover, the hydrogenation rate can be adjusted by adjusting reaction conditions such as a hydrogen gas-supplying pressure, a reaction temperature, and the like in a hydrogenation reaction as described in Production example 3 mentioned below.

A content of an SBR in the rubber component is preferably greater than 20% by mass, more preferably greater than 30% by mass, further preferably greater than 40% by mass, further preferably 50% by mass or more. On the other hand, the content may be, for example, less than 90% by mass, less than 80% by mass, or less than 70% by mass.

(BR)

The BR is not particularly limited, examples of which include, for example, those commonly used in the tire industry, such as a BR having a high cis content, a BR containing an 1,2-syndiotactic polybutadiene crystal (SPB-containing BR), a butadiene rubber synthesized using a rare-earth element-based catalyst (rare-earth-based BR), a tin-modified butadiene rubber modified with a tin compound (tin-modified BR), other modified butadiene rubbers (modified BR), and the like. As commercially available products of the BRs, products from UBE Corporation, JSR Corporation, Asahi Kasei Corporation, Zeon Corporation, etc. can be used. Examples of the modified BR include a BR modified with a borane complex mentioned below, as well as any BR having a functional group that interacts with a filler such as silica and the like, examples of which include, for example, a terminal-modified BR in which at least one terminal of a BR is modified with a compound (modifying agent) having the above-described functional group (terminal-modified BR having the above-described functional group at the terminal), a main chain-modified BR having the above-described functional group at the main chain, a main chain terminal-modified BR having the above-described functional groups at the main chain and terminal (for example, a main chain terminal-modified BR having the above-described functional group at the main chain and in which at least one terminal of the BR is modified with the above-described modifying agent), a terminal-modified BR which is modified (coupled) with a polyfunctional compound having two or more epoxy groups in a molecule and is introduced a hydroxy group or an epoxy group, and the like. Examples of the above-described functional group include, for example, an amino group, an amide group, a silyl group, an alkoxysilyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. Besides, these functional groups may have a substituent. Among them, an amino group (preferably an amino group in which a hydrogen atom of an amino group is substituted with an alkyl group having 1 to 6 carbon atoms), an alkoxy group (preferably an alkoxy group having 1 to 6 carbon atoms), and an alkoxysilyl group (preferably an alkoxysilyl group having 1 to 6 carbon atoms) are preferable. The BR may be used alone, or two or more thereof may be used in combination.

A cis content of a BR is preferably greater than 90 mol%, more preferably greater than 93 mol%, further preferably greater than 95 mol%, further preferably 97 mol% or more. The cis content of the BR and the content of $-CH=CH-$ unit can be measured by the above-described method.

As BRs, for example, products from UBE Corporation, JSR Corporation, Asahi Kasei Corporation, Zeon Corporation, etc. can be used.

A content of a BR in the rubber component is preferably greater than 20% by mass, more preferably greater than 30% by mass, further preferably greater than 40% by mass, further preferably 50% by mass or more. On the other hand, the content is preferably less than 90% by mass, more preferably less than 80% by mass, further preferably less than 70% by mass.

(IR-based rubber)

The rubber component may comprise an IR-based rubber. Examples of the IR-based rubber include a natural rubber (NR), an isoprene rubber (IR), a refined NR, a modified NR, a modified IR, and the like. As the NR, those common in the tire industry such as, for example, SIR20, RSS#3, TSR20, SVR-L, and the like can be used. The IR is not particularly limited, and those common in the tire industry such as, for example, IR 2200 and the like can be used. Examples of the refined NR include a deproteinized natural rubber (DPNR), an ultra pure natural rubber (UPNR), and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. Moreover, the modified NR and the modified IR also include a NR and an IR that are modified with a borane complex mentioned below. The isoprene-based rubber may be used alone, or two or more thereof may be used in combination.

A content of an IR-based rubber in the rubber component is preferably greater than 5% by mass, more preferably greater than 10% by mass, further preferably greater than 15% by mass, further preferably 20% by mass or more. On the other hand, the content may be 50% by mass, but is preferably less than 45% by mass, more preferably less than 40% by mass.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a butadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10.

pMC is a ratio of $^{14}C$ concentration of a sample to $^{14}C$ concentration of a modern standard carbon (modern standard reference) and a value used as an index indicating a biomass ratio of a compound. A significance of this value is mentioned below.

In 1 mole of carbon atoms ($6.02 \times 10^{23}$ pieces), there are about $6.02 \times 10^{11}$ $^{14}C$ that are about one trillionth of the

number of normal carbon atoms. A half-life of $^{14}C$ is 5730 years, and $^{14}C$ regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, a natural gas, and the like do not contain any $^{14}C$ element. Therefore, chemical substances produced using these fossil fuels as raw materials do not contain any $^{14}C$ element as well.

On the other hand, $^{14}C$ is constantly generated by cosmic rays causing nuclear reactions in the atmosphere. Thus, decrease in $^{14}C$ due to radioactive decay and generation of $^{14}C$ due to nuclear reactions are balanced, and the amount of $^{14}C$ has been constant in the Earth's atmospheric environment. Therefore, the $^{14}C$ concentration of substances derived from biomass resources that have been circulating in the current environment becomes a value of about $1\times10^{-12}$ mol% based on total C atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference for the $^{14}C$ concentration. As a specific reference material, an oxalic acid standard provided by NIST (National Institute of Standards and Technology) is used. A specific radioactivity of carbon in this oxalic acid (radioactivity intensity of $^{14}C$ per gram of carbon) is sorted for each carbon isotope, $^{13}C$ is corrected to a constant value, and a value corrected for attenuation from 1950 to the date of measurement is used as a standard $^{14}C$ concentration value (100%). A ratio of this value to a value actually measured for a sample becomes a pMC value.

Thus, if a rubber is produced from a material derived from 100% biomass, the $^{14}C$ concentration shows a value of approximately 110 pMC, often not equal to 100 under a normal condition currently, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a cross-linked rubber.

<Boron atom-containing group>

The cross-linked rubber has a boron atom-containing group. The boron atom-containing group is typically derived by compounding a compound having the boron atom-containing group in a structural formula (hereinafter referred to as a boron atom-containing compound) into a cross-linked rubber separately from a rubber component. Moreover, the boron atom-containing group can also be included in a cross-linked rubber by using an SBR, a BR, an IR-based rubber, or the like, modified with a borane complex. The boron atom-containing compound can be any compound as long as it comprises boron in a molecule and a functional group in the molecule can bond with a double bond of the polymers to enable crosslinking between the polymers, or it comprises boron in the molecule and further comprises a moiety that interacts with a filler in the molecule.

Examples of the boron atom-containing compound in which the functional group in the molecule bonds with the double bond of the polymers include, for example, a compound that forms a cross-linking site bonded via boron-oxygen bond, a compound that forms a cross-linking site bonded via boron-sulfur bond, a compound that forms a cross-linking site bonded via boron-carbon bond, a compound that forms a cross-linking site bonded via boron-nitrogen bond, and the like. Among them, a compound that forms a cross-linking site bonded via boron-oxygen bond is preferable.

Moreover, examples of the boron atom-containing compound that comprises the moiety that interacts with the filler in the molecule include a borane complex mentioned below.

(Compound that forms cross-linking site bonded via boron-oxygen bond)

The cross-linked rubber may comprise a compound that forms a cross-linking site bonded via boron-oxygen bond. The cross-linked rubber thereby has a cross-linking site bonded via boron-oxygen bond. As the compound that forms the cross-linking site bonded via boron-oxygen bond, a compound that forms a cross-linking site via diboronic acid ester skeleton is preferable. Examples of such a compound can include, for example, a diboronic acid ester compound represented by the formula:

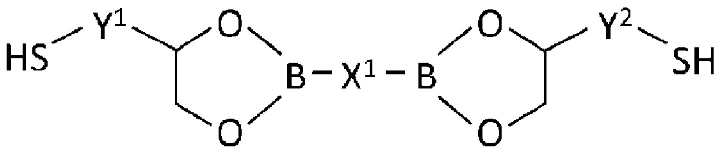

(provided that $X^1$ is a single bond or any divalent group, and Y' and $Y^2$ are each independently a single bond or a divalent hydrocarbon group).

The compound has a functional group (a mercapto group) that bonds with double bonds of a polymer, so that it can be used as a cross-linking agent. When the diboronic acid ester compound is used to cross-link between the polymers, a cross-linking site includes a diboronic acid ester skeleton unit represented by the following partial structural formula:

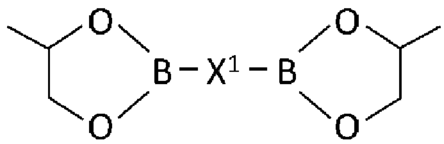

(wherein the symbols have the same meanings as those described above).

Examples of the divalent group of $X^1$ include, for example: linear or branched aliphatic groups having 1 to 10 carbon atoms (an alkylene group, an alkenylene groups, an alkynylene groups); aromatic groups having 6 to 20 carbon atoms (a 1,2-phenylene group, a 1,3-phenylene group, a 1,4-phenylene group, a 1,4-naphthylene group, a 1,5-naphthylene group, a 2,6-naphthylene group, a 4,4'-biphenylene group, and the like); and the like. The aliphatic group and the aromatic group may be intervened by -O-, -S-, -O-C(=O)-, -C(=O)-O-, -O-C(=O)-O-, -$NR^1$-C(=O)-, -C(=O)-$NR^1$-, -$NR^1$-, or -C(=O)-. Besides, $R^1$ represents a hydrogen atom or an alkyl group having 1 to 6 carbon atoms. Preferred examples of $X^1$ can include a 1,4-phenylene group. Moreover, examples of the divalent hydrocarbon group of Y' and $Y^2$ can include an alkylene group having 1 to 3 carbon atoms. Among them, a methylene group is preferable.

The compound that forms the cross-linking site bonded via boron-oxygen bond may be used alone, or two or more thereof may be used in combination.

A content of the compound that forms the cross-linking site bonded via boron-oxygen bond, such as a diboronic acid ester compound and the like, may be greater than 0 part by mass based on 100 parts by mass of the rubber component, and is, for example, 1 part by mass or more, preferably 2 parts by mass or more, more preferably 3 parts by mass or more, further preferably 5 parts by mass or more. On the other hand, the content is 50 parts by mass or less, preferably 40 parts by mass or less, more preferably 35 parts by mass or less, further preferably 30 parts by mass or less.

(Borane complex)

Examples of the borane complex can include a complex of a nitrogen-containing aromatic compound and a borane compound. Examples of the nitrogen-containing aromatic compound include at least one selected from the group consisting of pyridine, quinoxaline, pyrrole, pyrazine, pyrimidine, pyridazine, thiazole, oxazole, imidazole, pyrazole, isoxazole, isothiazole, triazole, furazan, oxadithiazole, thiadiazole, dioxazole, and dithiazole. These nitrogen-containing aromatic compounds may have a substituent (for example, an alkyl group having 1 to 10 carbon atoms). The borane compound may be any compound having at least one B-H bond, and examples of such a compound include, for example, borane ($BH_3$), alkylborane, dialkylborane, arylborane, diarylborane, alkylarylborane, and the like.

Examples of the complex of the nitrogen-containing aromatic compound and the borane compound can include pyridine borane, picoline borane, pyrrole borane, aniline borane, and the like.

In the complex of the nitrogen-containing aromatic compound and the borane compound, boron is bonded to a double-bond part of the polymer, and a nitrogen-containing aromatic compound part strongly interacts with a filler such as silica and the like, resulting in a cross-linked rubber having a boron atom-containing group. It is considered that improvement of dispersibility of the filler allows for solving the problem of improving durability.

A content of the borane complex is less than 20 parts by mass, preferably less than 18 parts by mass, more preferably less than 15 parts by mass, further preferably less than 13 parts by mass, based on 100 parts by mass of the rubber component. On the other hand, a lower limit of the content of the borane complex may be greater than 0 part by mass, and is, for example, 1 part by mass or more, preferably 2 parts by mass or more, more preferably 3 parts by mass or more, further preferably 5 parts by mass or more.

Moreover, as previously mentioned, the borane complex is used to modify an SBR, and the obtained modified SBR can be used as a rubber component. A content of the borane complex in the modified SBR modified with the borane complex can be the same as the content of the borane complex in the cross-linked rubber.

<Radical initiator>

When the compound that forms the cross-linking site bonded via boron-oxygen bond, such as the diboronic acid ester compound and the like, is compounded, it is preferable to compound a radical initiator. Examples of the radical initiator include, for example: inorganic peroxides such as potassium persulfate, sodium persulfate, ammonium persulfate, potassium perphosphate, hydrogen peroxide, and the like; organic peroxides such as t-butyl peroxide, cumene hydroperoxide, p-menthane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, t-butylperoxyisobutyrate, and the like; azo compounds such as 2,2'-azobisisobutyronitrile (AIBN), azobis-2,4-dimethylvaleronitrile, azobiscyclohexanecarbonitrile, methyl azobisisobutyrate, and the like; and the like. These radical initiators may be used alone, or two or more thereof may be used in combination. Among them, the radical initiator is preferably an azo compound, more preferably 2,2'-azobisisobutyronitrile.

A content of a radical initiator is not particularly limited, but can be set to 0.1 parts by mass or more and 3 parts by mass or less based on 100 parts by mass of the rubber component.

<Filler>

The cross-linked rubber can comprise a filler. Examples of the filler include those commonly used in the tire industry, such as carbon black, silica, and the like. Examples of fillers other than carbon black and silica can include aluminum hydroxide, calcium carbonate, alumina, clay, talc, and the like. The filler may be one comprising carbon black and silica, may be one consisting of carbon black and silica, or may be one consisting of silica or carbon black.

(Carbon black)

Examples of carbon black include, but not particularly limited to, N134, N110, N220, N234, N219, N339, N330, N326, N351, N550, N660, N762, and the like. A raw material of carbon black may be a biomass material such as lignin, a vegetable oil, and the like, from the viewpoint of life cycle assessment. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Chemical & Material Co., Ltd., Columbia Chemical Corporation, etc. can be used. Carbon black may be used alone, or two or more thereof may be used in combination.

An average primary particle size of carbon black is preferably 5 nm or more, more preferably 8 nm or more, further preferably 12 nm or more, particularly preferably 15 nm or more. When the average primary particle size of carbon black is within the above-described ranges, rubber molecules by carbon black are minimized and become easy to flexibly move, so that it is considered that the stress can be relaxed even in a polymer molecular chain against an input. On the other hand, the average primary particle size is preferably 90 nm or less, more preferably 75 nm or less, further preferably 60 nm or less. Besides, the average primary particle size of carbon black is measured by the above-described measuring method.

A nitrogen adsorption specific surface area ($N_2SA$) of carbon black is, but not particularly limited to, preferably greater than 30 $m^2/g$, more preferably greater than 40 $m^2/g$, further preferably greater than 50 $m^2/g$, further preferably greater than 60 $m^2/g$, further preferably greater than 70 $m^2/g$, from the viewpoint of obtaining a sufficient reinforcing property and a good abrasion resistance. Moreover, the $N_2SA$ is preferably less than 300 $m^2/g$, more preferably less than 200 $m^2/g$, further preferably less than 150 $m^2/g$, further preferably less than 120 $m^2/g$, further preferably less than 110 $m^2/g$, further preferably less than 100 $m^2/g$, further preferably less than 90 $m^2/g$, from the viewpoints of an excellent dispersibility and unlikeliness for heat generation. Besides, the $N_2SA$ of carbon black in the present specification is a value measured in accordance with JIS K 6217-2:2017.

Carbon black may include a recovered carbon black. The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP 3173251 A, carbon black comprising a hydroxyl and/or carboxyl group on its surface is obtained by treating carbon black obtained from a pyrolysis process with potassium permanganate under an acidic condition. Moreover, in JP6856781 B, carbon black whose surface is activated

is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group. The recovered carbon black may be used alone, or two or more thereof may be used in combination.

A content of carbon black is, for example, greater than 3 parts by mass, preferably greater than 4 parts by mass, more preferably 5 parts by mass or more, based on 100 parts by mass of the rubber component. On the other hand, the total content is preferably less than 100 parts by mass, more preferably less than 80 parts by mass, further preferably less than 60 parts by mass. When the content of carbon black is within the above-described ranges, a good dispersibility in a rubber is obtained and a sufficient reinforcing property tends to be obtained.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. Silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.).

As an amorphous silica extracted from rice husks, those commercially available from Wilmar, etc. can be used.

A nitrogen adsorption specific surface area ($N_2SA$) of silica is preferably greater than 50 $m^2/g$, more preferably greater than 100 $m^2/g$, further preferably greater than 150 $m^2/g$, particularly preferably greater than 170 $m^2/g$. Moreover, an upper limit of the $N_2SA$ of silica is, but not particularly limited to, preferably less than 350 $m^2/g$, more preferably less than 250 $m^2/g$, further preferably less than 200 $m^2/g$. When it is within the above-described ranges, cut resistance tends to be improved. Besides, the $N_2SA$ of silica is measured by the above-described measuring method.

An average primary particle size of silica is preferably greater than 10 nm, more preferably greater than 12 nm, further preferably greater than 14 nm, particularly preferably greater than 16 nm, from the viewpoint of the effects of the present invention. Moreover, the average primary particle size is preferably less than 24 nm, more preferably less than 22 nm, further preferably less than 20 nm. Besides, the average primary particle size of silica is measured by the above-described measuring method.

A content of silica when compounded based on 100 parts by mass of the rubber component is not particularly limited, but from the viewpoint of durability and, in a case of compounding a borane complex, from the viewpoint of obtaining a strong interaction with a nitrogen-containing aromatic compound, the content is preferably greater than 1 part by mass, more preferably greater than 5 parts by mass, more preferably greater than 10 parts by mass, further preferably greater than 20 parts by mass. Moreover, the content is preferably less than 150 parts by mass, more preferably less than 100 parts by mass, further preferably less than 50 parts by mass, further preferably less than 30 parts by mass, from the viewpoints of dispersibility of silica and processability.

(Silane coupling agent)

When silica is used, it is preferable that the rubber composition further comprises a silane coupling agent. The silane coupling agent is not particularly limited, examples of which include, for example, sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, 3-triethoxysilylpropyl methacrylate monosulfide, and the like; mercapto-based silane coupling agents such as 3-mercaptopropyltrimethoxysilane, 2-mercaptoethyltriethoxysilane, NXT and NXT-Z manufactured by Momentive Performance Materials, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. As commercially available products, products from Evonik Industries AG, Momentive Performance Materials, Shin-Etsu Chemical Co., Ltd., Tokyo Chemical Industry Co., Ltd., AZmax.co, Dow Corning Toray Co., Ltd., etc. can be used. The silane coupling agent may be used alone, or two or more thereof may be used in combination.

A content of a silane coupling agent when compounded is preferably greater than 1 part by mass, more preferably greater than 3 parts by mass, further preferably greater than 5 parts by mass, further preferably greater than 7 parts by mass, based on 100 parts by mass of silica. On the other hand, the content is preferably less than 20 parts by mass, more preferably less than 18 parts by mass, further preferably less than 16 parts by mass, further preferably less than 14 parts by mass. When it is within the above-described ranges, dispersibility of silica tends to be improved.

<Other compounding agents>

The cross-linked rubber can appropriately comprise compounding agents conventionally and commonly used in the tire industry, for example, a plasticizing agent, a compatibilizer, processing aid, a vulcanized rubber particle, wax, stearic acid, zinc oxide, an antioxidant, a cross-linking agent, a vulcanization accelerator, and the like, in addition to the rubber components and the fillers.

(Plasticizing agent)

The plasticizing agent is a material that imparts plasticity to the rubber component, and has a concept that includes both a plasticizing agent in a liquid state at 25°C and a plasticizing agent that is solid at 25°C. Examples of the plasticizing agent include, resin, oil, a liquid rubber, an ester-based plasticizing agent, and the like. These plasticizing agents may be ones derived from mineral resources such as petroleum, a natural gas, and the like, or naphtha-derived ones recycled from a rubber product or a non-rubber product. Moreover, low-molecular-weight hydrocarbon components obtained by pyrolyzing used tires or products containing these agents and performing extraction from the pyrolysate may be used as plasticizing agents. The plasticizing agent may be used alone, or two or more thereof may be used in combination.

<<Resin>>

The cross-linked rubber may comprise resin among the above-described other compounding agents. Resin is not particularly limited, and resin commonly used in the tire industry can be used, examples of which include, for example, an aromatic vinyl-based resin, a dicyclopentadiene-based resin, a C9-based resin, a C5-based resin, a C5/C9-based resin, a terpene-based resin, a rosin-based resin, a phenol-based resin, and the like. Among them, an aromatic vinyl-based resin, a dicyclopentadiene-based resin, a C9-based resin, and a terpene-based resin are preferable. These resin may be used alone, or two or more thereof may be used in combination.

· Aromatic vinyl-based resin

An "aromatic vinyl-based resin" refers to resin comprising at least one aromatic vinyl compound selected from the group consisting of styrene, α-methylstyrene, vinyltoluene, p-chlorostyrene, and the like as a monomer component having the largest content, and may be one obtained by hydrogenating or modifying them. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used. The resin may be used alone, or two or more thereof may be used in combination.

· Dicyclopentadiene-based resin

A "dicyclopentadiene-based resin" refers to resin comprising dicyclopentadiene (DCPD) as a monomer component having the largest content and may be one obtained by hydrogenating or modifying it. Examples of the dicyclopentadiene-based resin include, for example, a DCPD/C9 resin obtained by copolymerizing dicyclopentadiene with the C9 fraction, and the like. Among them, a DCPD/C9 resin is preferable. As the DCPD resin, for example, those commercially available from Exxon Mobil Corporation, ENEOS Corporation, Zeon Corporation, Maruzen Petrochemical Co., Ltd., etc. can be used. The resin may be used alone, or two or more thereof may be used in combination.

· C9-based resin

A "C9-based resin" refers to resin obtained by polymerizing C9 fractions and may be a polymer obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, it may be one obtained by hydrogenating or modifying them. Examples of the C9 fraction include, for example, a petroleum fraction having 8 to 10 carbon atoms, which is at least one selected from the group consisting of vinyltoluene, alkylstyrene, coumarone, indene, methylindene, dicyclopentadiene, and the like. Specific examples of the C9-based resin include, for example, a coumarone-indene resin, a coumarone resin, an indene resin, and the like. The resin may be used alone, or two or more thereof may be used in combination.

· C5-bases resin

A "C5-based resin" refers to resin obtained by polymerizing a C5 fraction other than dicyclopentadiene, and may be one obtained by hydrogenating or modifying them. Examples of the C5 fraction other than dicyclopentadiene include, for example, a petroleum fraction having 4 to 5 carbon atoms, which is at least one selected from the group consisting of cyclopentadiene, isoprene, pentane, isopentane, neopentane, pentene, pentadiene, and the like. The resin may be used alone, or two or more thereof may be used in combination.

· C5/C9-based resin

A "C5/C9-based resin" refers to resin obtained by copolymerizing the C5 fraction and the C9 fraction and may be one obtained by hydrogenating or modifying them. As the C5/C9-based resin, for example, those commercially available from Tosoh Corporation, Zibo Luhua Hongjin New Material Group Co., Ltd, etc. can be appropriately used. The resin may be used alone, or two or more thereof may be used in combination.

· Terpene-based resin

The terpene-based resin refers to a resin comprising a terpene compound of at least one selected from the group consisting of such as α-pinene, β-pinene, limonene, dipentene, and the like as a monomer component having the largest content, and may be one obtained by hydrogenating or modifying them. Specific examples of the terpene-based resin include, for example, a polyterpene resin only comprising one or more of the terpene compounds as monomer components; an aromatic-modified terpene resin comprising the terpene compound and an aromatic compound as monomer components; a terpene phenolic resin comprising the terpene compound and a phenol-based compound as monomer components; and the like. Examples of the aromatic compound used as a monomer component for the aromatic-modified terpene resin include, for example, at least one selected from the group consisting of styrene, α-methylstyrene, vinyltoluene, divinyltoluene, and the like. Examples of the phenol-based compound used as a monomer component for the terpene phenolic resin include, for example, at least one selected from the group consisting of phenol, bisphenol A, cresol, xylenol, and the like. The resin may be used alone, or two or more thereof may be used in combination.

· Rosin-based resin

The rosin-based resin refers to resin comprising a rosin acid compound of at least one selected from the group consisting of abietic acid, neoabietic acid, palustric acid, isopimaric acid, and the like, preferably as a monomer component having the largest content, and may be one obtained by hydrogenating or modifying them. Example of the rosin-based resin include, but not particularly limited to, for example, a natural resin rosin and a rosin-modified resin obtained by modifying it by hydrogenation, disproportionation, dimerization, esterification, etc., and the like. The resin may be used alone, or two or more thereof may be used in combination.

· Phenol-based resin

A phenol-based resin refers to a resin comprising a phenolic compound such as phenol, cresol, and the like as a monomer component having the largest content, preferably 50 mol% or more. Examples of the phenol-based resin include, but not particularly limited to, a phenol formaldehyde resin, an alkylphenol formaldehyde resin, an alkylphenol acetylene resin, an oil-modified phenol formaldehyde resin, and the like. The resin may be used alone, or two or more thereof may be used in combination.

A softening point of resin is preferably 60°C or higher, more preferably 75°C or higher, further preferably 90°C or higher, from the viewpoint of grip performance. Moreover, it is preferably 150°C or lower, more preferably 120°C or lower, further preferably 100°C or lower, from the viewpoints of processability and improvement of dispersibility of a rubber component with a filler. Besides, a softening point of resin is measured by the above-described measuring method.

<<Oil>>

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant, may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like. The mineral oil may be used alone, or two or more thereof may be used in combination.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, $^1$H-NMR measurement. For example, a heavy chloroform in which a rubber composition comprising triacylglycerol is immersed at 25°C for 24 hours and then removed is subjected to $^1$H-NMR at room temperature, and signals near 5.26 ppm, near 4.28 ppm, and near 4.15 ppm are observed under a condition that a signal of tetramethylsilane (TMS) is set to 0.00 ppm. The signals are presumed to be derived from hydrogen atoms bonded to carbon atoms adjacent to oxygen atoms of an ester group. Besides, "near" in this paragraph shall be a range of $\pm$0.10 ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, genome editing, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO

Group, Ltd., etc. can be used.

Examples of the animal oil include a fish oil, a beef tallow, an oleyl alcohol that can be derived therefrom, and the like.

A content of oil based on 100 parts by mass of the rubber component is preferably greater than 1 part by mass, more preferably greater than 2 parts by mass, further preferably 3 parts by mass or more. Moreover, the content is preferably less than 20 parts by mass, more preferably less than 15 parts by mass, further preferably 10 parts by mass or less. Besides, the content of oil includes an amount of oil contained in the rubber component as an extending oil and an amount of oil contained in other components such as sulfur and the like.

<<Liquid rubber>>

The liquid rubber is a polymer in a liquid state at 25°C, examples of which include, for example, a liquid diene-based polymer and the like. Examples of the liquid diene-based polymer include a liquid styrene-butadiene copolymer (a liquid SBR), a liquid butadiene polymer (a liquid BR), a liquid isoprene polymer (a liquid IR), a liquid styrene-isoprene copolymer (a liquid SIR), and the like. The liquid diene-based polymer preferably has a number average molecular weight (Mn), in terms of polystyrene, as measured by gel permeation chromatography (GPC), of preferably greater than 1000, more preferably greater than 3000. On the other hand, the Mn is preferably less than 100000, more preferably less than 15000. The Mn of the liquid rubber is a value in terms of polystyrene as measured by gel permeation chromatography (GPC). As the liquid diene-based polymer, for example, products from Sartomer, Kuraray Co., Ltd., etc. can be used. The liquid rubber may be used alone, or two or more thereof may be used in combination.

<<Ester-based plasticizing agent>>

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agent may be used alone, or two or more thereof may be used in combination.

A content of a plasticizing agent when compounded based on 100 parts by mass of the rubber component is preferably greater than 1 part by mass, more preferably greater than 1.5 parts by mass, further preferably 2 parts by mass or more, further preferably 3 parts by mass or more. On the other hand, the content is preferably less than 40 parts by mass, more preferably less than 20 parts by mass, further preferably less than 10 parts by mass.

<<Compatibilizer>>

A compatibilizer is used for the purpose of reducing a separation energy at an interface between a polymer and a filler or between different polymers and aiding in intermixing of polymers with each other. The compatibilizer is not particularly limited, and any of those conventionally used in the tire industry can be used. Specific examples of the compatibilizer include, for example: non-reactive compatibilizers such as an ethylene-propylene-styrene copolymer, a styrene-ethylene-butadiene block copolymer, a styrene-methyl methacrylate block copolymer, an ethylene-styrene graft copolymer, chlorinated polyethylene, a mixture of an aromatic hydrocarbon-based resin and an aliphatic hydrocarbon-based resin, a metal soap of an unsaturated fatty acid, and the like; and reactive compatibilizers such as a maleic anhydride graft polypropylene, a styrene-maleic anhydride copolymer, an ethylene-glycidyl methacrylate copolymer, a styrene graft copolymer onto an ethylene-glycidyl methacrylate copolymer, and the like. Among them, an ethylene-propylene-styrene copolymer is preferable. The compatibilizer may be used alone, or two or more thereof may be used in combination.

A content of a compatibilizer is not particularly limited, but in consideration of air barrier property, it is, for example, preferably greater than 3 parts by mass, more preferably greater than 4 parts by mass, further preferably 5 parts by mass or more, based on 100 parts by mass of the rubber component. On the other hand, the content is preferably less than 15 parts by mass, more preferably less than 12 parts by mass, further preferably less than 10 parts by mass.

(Processing aid)

Examples of processing aid include, for example, a fatty acid metal salt, a fatty acid amide, an amide ester, a silica surface active agent, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. Processing aid may be used alone, or two or more thereof may be used in

combination.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Vulcanized rubber particle)

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle is not particularly limited and may be a non-modified vulcanized rubber particle or a modified vulcanized rubber particle. As commercially available products of vulcanized rubbers, for example, products from Lehigh Technologies, Muraoka Rubber Reclaiming Co., Ltd., etc. can be used. The vulcanized rubber particle may be used alone, or two or more thereof may be used in combination.

(Wax)

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. Wax may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

(Stearic acid)

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 5 parts by mass, further preferably less than 3 parts by mass, from the viewpoint of vulcanization rate.

(Zinc oxide)

A content of zinc oxide when compounded based on 100 parts by mass of the rubber component is preferably greater than 0.5 parts by mass, more preferably greater than 0.7 parts by mass, further preferably 1 part by mass or more, from the viewpoint of processability. On the other hand, the content is preferably less than 10 parts by mass, more preferably less than 5 parts by mass, further preferably less than 3 parts by mass, from the viewpoint of abrasion resistance.

(Antioxidant)

Examples of the antioxidant include, but not particularly limited to, a naphthylamine-based antioxidant such as phenyl-α-naphthylamine and the like; a diphenylamine-based antioxidant such as an octylated diphenylamine, 4,4'-bis(α,α'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based

antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 0.8 parts by mass, further preferably greater than 1.0 parts by mass. On the other hand, the content is preferably less than 7.0 parts by mass, more preferably less than 5.0 parts by mass, further preferably 3.0 parts by mass or less.

(Cross-linking agent)

Cross-linking between polymers in the cross-linked rubber is not limited to cross-linking bonded via boron-oxygen bond, and may include another cross-linking such as sulfur cross-linking and the like. In this case, desired cross-linking agent and vulcanization accelerator can be appropriately compounded. The cross-linking agent is not particularly limited, and any known cross-linking agent can be used, examples of which include, for example, an organic peroxide, a sulfur-based vulcanizing agent, a resin vulcanizing agent, metal oxide such as magnesium oxide and the like, etc. Among them, a sulfur-based vulcanizing agent is preferable. As the sulfur-based vulcanizing agent, for example, sulfur, a sulfur donor such as morpholine disulfide and the like, etc. can be used. Among them, it is preferable to use sulfur. The cross-linking agent can be used alone, or two or more thereof can be used in combination.

Examples of sulfur include a powdered sulfur, a precipitated sulfur, a colloidal sulfur, a surface processing sulfur (an oil processing sulfur, a special sulfur processed with a dispersant, a masterbatch type sulfur, etc.), an insoluble sulfur (oil processing insoluble sulfur, etc.), and the like, any of which are appropriately used. Among them, a powdered sulfur is preferable. As sulfur, for example, those manufactured and sold by Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc., and the like can be used.

As a cross-linking agent, a known organic cross-linking agent can also be used. The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like. Among them, 1,6-bis(N,N'-dibenzylthiocarbamoyldithio)hexane is preferable. As these organic cross-linking agents, those commercially available from Taoka Chemical Co., Ltd., LANXESS, Flexsys, etc. can be used.

A content of a cross-linking agent when compounded based on 100 parts by mass of the rubber component is preferably greater than 0.4 parts by mass, more preferably 0.5 parts by mass or more, further preferably 1.0 parts by mass or more. On the other hand, the content is preferably less than 6.0 parts by mass, more preferably less than 4.0 parts by mass, further preferably less than 2.0 parts by mass. When the content of the cross-linking agent is within the above-described ranges, an appropriate reinforcing effect tends to be obtained. The content of the cross-linking agent in this case refers to a content of a cross-linking agent relating to cross-linking other than those bonded via boron-oxygen bond. Besides, when the cross-linking agent is a vulcanizing agent, which comprises a component other than sulfur, such as oil processing sulfur and the like, a content of the cross-linking agent means a content of the sulfur component itself.

<<Vulcanization accelerator>>

The vulcanization accelerator is not particularly limited, and any known vulcanization accelerator can be used, examples of which include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. Among them, thiazole-based, sulfenamide-based, thiuram-based, and guanidine-based vulcanization accelerators are preferable, and thiazole-based and sulfenamide-based vulcanization accelerators are more preferable. As the vulcanization accelerator, for example, those manufactured and sold by Ouchi Shinko Chemical Industry Co., Ltd., Sanshin Chemical Industry Co., Ltd., etc. can be used. The vulcanization accelerator may be used alone, or two or more thereof may be used in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DZ), and the like. Examples of the thiazole-based vulcanization accelerator include di-2-dibenzothiazolyl disulfide and the like. Examples of the thiuram-based vulcanization accelerator include, for example, tetramethylthiuram monosulfide, tetramethylthiuram disulfide, tetrabenzylthiuram disulfide (TBzTD), and the like. Examples of the guanidine-based vulcanization accelerator include, for example, 1,3-diphenylguanidine (DPG), diorthotrilguanidine, orthotrilbiguanidine,

and the like.

A content of a vulcanization accelerator based on 100 parts by mass of the rubber component is preferably greater than 0.3 parts by mass, more preferably greater than 0.5 parts by mass, further preferably 1.0 parts by mass or more. On the other hand, the content is preferably less than 4.0 parts by mass, more preferably less than 3.0 parts by mass, further preferably less than 2.5 parts by mass. When the content of the vulcanization accelerator is within the above-described ranges, breaking strength and elongation tend to be secured.

In the present specification, various materials comprising carbon atoms (for example, a rubber, oil, resin, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

[Cross-linked rubber constituting inner liner]

A cross-linked rubber constituting an inner liner will be described below. The cross-linked rubber constituting the inner liner will be described below, for which the explanation given for the cross-linked rubber constituting the cap tread can be applied in the same manner, unless there is any contradiction between them.

(Rubber component)

The rubber component preferably comprises a butyl-based rubber. In this case, the rubber component can comprise rubber components other than butyl-based rubbers. Examples of rubber components other than butyl-based rubbers can include, for example, diene-based rubbers such as an isoprene-based rubber (IR-based rubber), a styrene-butadiene rubber (SBR), a butadiene rubber (BR), and the like, and the above-described non-diene-based rubbers. Rubber components synthesized from the above-described recycled-derived and biomass-derived raw materials can also be used in the same manner. The butyl-based rubbers, the diene-based rubbers, and the non-diene-based rubbers may be used alone, or two or more thereof may be used in combination, respectively.

<<Butyl-based rubber>>

Examples of the butyl-based rubber include a butyl rubber (IIR), a halogenated butyl rubber (X-IIR) such as a brominated butyl rubber (Br-IIR), a chlorinated butyl rubber (Cl-IIR) and the like, etc. Among them, a halogenated butyl rubber is preferable, and a brominated butyl rubber and a chlorinated butyl rubber are more preferable, from the viewpoint that sheet processability and air barrier property can be improved with a good balance. The butyl-based rubber can be used alone, or two or more thereof can be used in combination.

As the butyl-based rubber, for example, products from Exxon Mobil Corporation, ENEOS Materials Corporation, ARLANXEO, JSR Corporation, Japan Butyl Co., Ltd., etc. can be used.

As for a boron atom-containing compound, a filler, and other compounding agents, the explanation given for the cross-linked rubber constituting the cap tread can be similarly applied.

[Cross-linked rubber constituting rubber components other than cap tread and inner liner]

As for a cross-linked rubber constituting a rubber member other than the cap tread and the inner liner, such as, for example, a base tread, a sidewall, a clinch apex, a wing, and the like, the explanation given for the cross-linked rubber constituting the cap tread can be similarly applied.

<Producing method>

The tire relating to the present embodiment can be produced by a known method.

(Production of rubber composition)

A rubber composition before cross-linking comprising a rubber component and a cross-linking agent can be produced by a known method. For example, it can be produced by kneading each of the above-described components using a rubber kneading apparatus such as an open roll, a closed type kneader (Bunbury mixer, kneader, etc.), and the like. The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired. Examples of a kneading condition include, but not

particularly limited to, for example, in the base kneading step, a method of kneading at a discharge temperature from 130 to 170°C for 3 to 10 minutes, and in the final kneading step, a method of kneading at 50 to 110°C for 1 to 5 minutes.

(Production of tire)

Each of the rubber compositions obtained above is extruded into a desired shape of a rubber member at an uncrosslinked stage. The rubber member is, for example, at least one selected from the group consisting of a cap tread, an inner liner, a sidewall, a clinch apex, a wing, and the like. The rubber member thus obtained can be molded together with other rubber members on a tire molding machine by a usual method to form an uncrosslinked tire. The tire of the present embodiment can be produced by heating and pressurizing this uncrosslinked tire in a vulcanizer. Examples of a cross-linking condition include, but not particularly limited to, for example, a method of cross-linking at 150 to 200°C for 5 to 30 minutes.

<Application>

In the present specification, the tire can be used for any applications, regardless of whether it is a pneumatic tire or a non-pneumatic tire, and can be used as a tire for a passenger car, a tire for a large passenger car, a tire for a large SUV, a racing tire, a motorcycle tire, a heavy-duty tire, or a run flat tire. Besides, the tire for a passenger car is a tire on the premise that it is mounted on a car running on four wheels and refers to one having a maximum load capacity of less than 1400 kg. Moreover, the heavy-duty tire refers to a tire with a maximum load capacity of 1400 kg or more. Moreover, in the present specification, the tire can be used as an all-season tire, a summer tire, or a winter tire such as a studless tire and the like.

EXAMPLES

Examples considered to be preferable in implementation (Examples) are shown below, though the scope of the present invention is not limited to Examples. Results calculated based on the following evaluation methods considering a tire obtained according to each Table using various chemicals shown below are shown as durability indexes in the lower part of each Table.

<Various chemicals>

Various chemicals used in Examples and Comparative examples are collectively described below.

IR-based rubber: Natural rubber (TSR-20)
SBR1: SBR produced in Production example 1 mentioned below (styrene content: 30% by mass, vinyl content: 10 mol%, Mw: 400,000)
SBR2: SBR produced in Production example 2 mentioned below (styrene content: 30% by mass, vinyl content: 50 mol%, Mw: 450,000)
SBR3: Hydrogenated SBR produced in Production example 3 mentioned below (styrene content: 30% by mass, vinyl content (before hydrogenation): 25 mol%, ethylene unit: 90 mol%, butadiene unit: 10 mol%, hydrogenation rate: 95%, Mw: 400,000)
BR: Butadiene rubber (manufactured by UBE Elastomer Co. Ltd., BR150B, cis content: 97 mol%, vinyl content: 1 mol%)
Pyridine borane (manufactured by Tokyo Chemical Industry Co., Ltd., molecular weight: 92.94, of which boron atom weight: 10.81, purity: 80%)
BDB: Diboronic acid ester compound represented by the following formula (in-house synthesized product, molecular weight: 310.01, of which a total boron atom weight: 21.62)

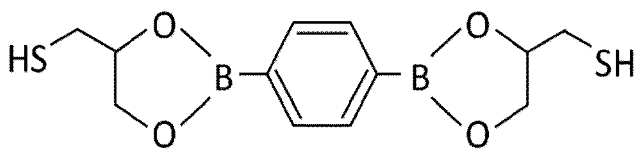

CB: DIABLACK N220 (manufactured by Mitsubishi Chemical Corporation, $N_2SA$: 115 $m^2/g$)
Silica: Ultrasil VN3 (manufactured by Evonik Industries AG, $N_2SA$: 175 $m^2/g$, average primary particle size: 17 nm)
Silane coupling agent: Si266 (manufactured by Evonik Industries AG, bis(3-triethoxysilylpropyl)disulfide)
Wax: OZOACE 0355 (manufactured by Nippon Seiro Co., Ltd., paraffin-based)

Antioxidant 1: Nocrac 6C (manufactured by Ouchi Shinko Chemical Industry Co., Ltd., N-(1,3-dimethylbutyl)-N'-phenyl-p-phenylenediamine)
Antioxidant 2: Nocrac RD (manufactured by Ouchi Shinko Chemical Industry Co., Ltd., poly(2,2,4-trimethyl-1,2-dihydroquinoline))
Zinc oxide: Zinc oxide No. 1 (manufactured by Mitsui Mining & Smelting Co., Ltd.)
Stearic acid: Bead stearic acid "CAMELLIA" (manufactured by NOF CORPORATION)
Radical initiator: Azobisisobutyronitrile (manufactured by Tokyo Chemical Industry Co., Ltd., AIBN)
Sulfur: HK-200-5 (manufactured by Hosoi Chemical Industry Co., Ltd., powdered sulfur, oil content: 5% by mass)
Vulcanization accelerator 1: Nocceler D (manufactured by Ouchi Shinko Chemical Industry Co., Ltd., N,N'-diphenylguanidine (DPG))
Vulcanization accelerator 2: Nocceler DM-P (manufactured by Ouchi Shinko Chemical Industry Co., Ltd., di-2-benzothiazolyl disulfide (MBTS))
Vulcanization accelerator 3: Nocceler NS (manufactured by Ouchi Shinko Chemical Industry Co., Ltd., N-(tert-butyl)-2-benzothiazolesulfenamide (TBBS))

Production example 1: Production of SBR1

600 mL of hexane, 75 g of 1,3-butadiene, 25 g of styrene, and 60 mL of tetrahydrofuran are charged into an autoclave reactor subjected to nitrogen purge and stirred at 40°C. After adding 0.1 mol/L of n-butyllithium/hexane solution in 0.5 mL each to scavenge them, 4 mL of 0.1 mol/L n-butyllithium/hexane solution is added, and the mixture is stirred at a stirring speed of 130 rpm and a jacket temperature of 80°C. After confirming production of a polymer having a Mw of 250,000 by GPC, a polymerization solution is poured into 4 L of ethanol to collect a precipitate. After blow-drying the obtained precipitate, it is dried under reduced pressure at 80°C/10 Pa or lower until a drying loss becomes 0.1% to obtain SBR1.

Production example 2: Synthesis of SBR2

SBR2 is obtained in the similar manner as in Production example 1 except that a ratio of styrene and 1,3-butadiene is adjusted so that a vinyl content is 50 mol%.

Production example 3: Synthesis of hydrogenated SBR

To a heat-resistant reaction vessel sufficiently subjected to nitrogen purge, 2,000 mL of n-hexane, 60 g of styrene, 140 g of 1,3-butadiene, 0.9 g of TMEDA (N,N,N',N'-tetramethylethylenediamine), and 0.45 mmol of n-butyllithium are added, and the mixture is stirred at 50°C for 5 hours to perform a polymerization reaction. Next, the mixture is stirred for 20 minutes while supplying a hydrogen gas at a pressure of 0.4 MPa-Gauge and reacted with an unreacted polymer terminal lithium into lithium hydride. Hydrogenation is performed using a catalyst mainly composed of titanocenedichloride with a hydrogen gas-supplying pressure at 0.7 MPa-Gauge and a reaction temperature titanosendichloride at 90°C. When hydrogen absorption reaches an integrated amount of an intended hydrogenation rate, the reaction temperature is set to a normal temperature and the hydrogen pressure is returned to a normal pressure to extract the hydrogen gas from the reaction vessel, and the reaction solution is charged and stirred in water to remove the solvent by steam stripping, thereby obtaining a hydrogenated SBR. The hydrogenated SBR obtained is evaluated as follows.

Measurement of hydrogenation rate

A solution of the obtained polymer with a concentration of 15% by mass is prepared using carbon tetrachloride as a solvent to calculate a hydrogenation rate from a spectral reduction rate of an unsaturated bond part of $^1$H-NMR at 100 MHz.

Measurement of styrene content

$^1$H-NMR measurement was performed at 25°C using a JEOL JNM-A 400 NMR device, from which spectrum a phenyl proton based on 6.5 to 7.2 ppm styrene unit and a vinyl proton based on 4.9-5.4 ppm butadiene unit are calculated, determining a styrene content from a ratio of the phenyl proton to the vinyl proton.

Measurement of weight-average molecular weight (Mw)

A Mw is calculated in terms of a standard polystyrene based on measurement values obtained by a gel

permeation chromatography (GPC) (GPC-8000 Series manufactured by Tosoh Corporation, detector: differential refractometer, column: TSKgel (Registered Trademark) SuperMultiporeHZ-M manufactured by Tosoh Corporation).

A hydrogenated SBR to be obtained has a hydrogenation rate of 95 mol%, a styrene content of 30% by mass, and a weight-average molecular weight (Mw) of 400,000.

<Rubber composition for cap tread and tire>

According to the compounding formulations shown in Tables 1 and 3, using a 1.7 L closed Banbury mixer, all chemicals other than sulfur and vulcanization accelerators are kneaded until a temperature reaches a discharge temperature at 130°C for 4 minutes to obtain a kneaded product. Next, using a twin-screw open roll, sulfur and vulcanization accelerators are added to the obtained kneaded product, and the mixture is kneaded for 4 minutes until the temperature reaches 80°C to obtain an uncrosslinked rubber composition for cap tread.

According to the descriptions in Tables 1 and 3, the uncrosslinked rubber composition for cap tread is molded into a shape of a cap tread, which is further attached together with other tire members, forming an uncrosslinked tire, and the uncrosslinked tire is press-vulcanized (cross-linked) under a condition of 170°C for 12 minutes to produce each test tire (size: 195/65R15). Besides, regardless of a thickness of the cap tread, thicknesses of base treads shall be constant.

<Rubber composition for sidewall and tire>

According to the compounding formulations shown in Table 2, using a 1.7 L closed Banbury mixer, all chemicals other than sulfur and vulcanization accelerators are kneaded at a discharge temperature of 150°C for 5 minutes. Next, sulfur and vulcanization accelerators are added to the obtained kneaded product, and the mixture is kneaded for 4 minutes until the temperature reaches 105°C using an open roll to obtain an uncrosslinked rubber composition for sidewall.

According to the descriptions in Table 2, the uncrosslinked rubber composition for sidewall is molded into a shape of a sidewall, which is further attached together with other tire members, forming an uncrosslinked tire, and the uncrosslinked tire is press-vulcanized (cross-linked) under a condition of 170°C for 12 minutes to produce e test tire (size: 195/65R15).

<Durability>

Each test tire is incorporated into a standardized rim and filled with air to an internal pressure of 230 kPa. The tire is mounted on a drum type running tester and applied with a standardized load. The tire is made to run on a drum at a speed of 80 km/h, and a running distance until peeling or destruction occurs on a member is measured. The results are indicated as indexes with a running distance in the reference Comparative example being as 100. The larger the numerical value is, the better the effect is.

Table 1

| (Rubber member: cap tread) | | | | | | | | | | | |
|---|---|---|---|---|---|---|---|---|---|---|---|
| | Example | | | | | | | Comparative example | | | |
| | 1-1 | 1-2 | 1-3 | 1-4 | 1-5 | 1-6 | 1-7 | 1-1 | 1-2 | 1-3 | 1-4 |
| Compounding (parts by mass) | | | | | | | | | | | |
| IR-based rubber | - | - | 20 | - | - | - | - | - | - | - | 20 |
| SBR1 | 50 | 50 | 50 | 50 | - | 70 | 70 | 50 | - | - | 30 |
| SBR2 | - | - | - | - | - | - | - | - | 40 | 40 | - |
| SBR3 | - | - | - | - | 50 | - | - | - | - | - | - |
| BR | 50 | 50 | 30 | 50 | 50 | 30 | 30 | 50 | 60 | 60 | 50 |
| BDB | 25 | 25 | 25 | 5 | 25 | 25 | 25 | - | 25 | - | - |
| CB | 50 | 50 | 50 | 50 | 50 | 50 | 50 | 50 | 50 | 50 | 50 |
| Silica | - | - | - | - | - | - | - | - | - | - | - |
| Silane coupling agent | - | - | - | - | - | - | - | - | - | - | - |
| Wax | 2.0 | 2.0 | 2.0 | 2.0 | 2.0 | 2.0 | 2.0 | 2.0 | 2.0 | 2.0 | 2.0 |
| Antioxidant 1 | 2.5 | 2.5 | 2.5 | 2.5 | 2.5 | 2.5 | 2.5 | 2.5 | 2.5 | 2.5 | 2.5 |
| Antioxidant 2 | 1.0 | 1.0 | 1.0 | 1.0 | 1.0 | 1.0 | 1.0 | 1.0 | 1.0 | 1.0 | 1.0 |

(continued)

| (Rubber member: cap tread) | | | | | | | | | | | |
|---|---|---|---|---|---|---|---|---|---|---|---|
| | Example | | | | | | | Comparative example | | | |
| | 1-1 | 1-2 | 1-3 | 1-4 | 1-5 | 1-6 | 1-7 | 1-1 | 1-2 | 1-3 | 1-4 |
| Compounding (parts by mass) | | | | | | | | | | | |
| Zinc oxide | 2.0 | 2.0 | 2.0 | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 | 2.0 | 2.0 | 2.0 |
| Radical initiator | 0.1 | 0.1 | 0.1 | 0.1 | 0.1 | - | - | - | 0.1 | - | - |
| Vulcanization accelerator 1 | 0.6 | 0.6 | 0.6 | 0.6 | 0.6 | 0.6 | 0.6 | 0.6 | 0.6 | 0.6 | 0.6 |
| Vulcanization accelerator 2 | 0.6 | 0.6 | 0.6 | 0.6 | 0.6 | 0.6 | 0.6 | 0.6 | 0.6 | 0.6 | 0.6 |
| Vulcanization accelerator 3 | 0.6 | 0.6 | 0.6 | 0.6 | 0.6 | 0.6 | 0.6 | 0.6 | 0.6 | 0.6 | 0.6 |
| Sulfur | 1.0 | 1.0 | 1.0 | 1.0 | 1.0 | 1.0 | 1.0 | 1.0 | 1.0 | 1.0 | 1.0 |
| Content of boron (parts by mass) [B] | 1.74 | 1.74 | 1.74 | 0.35 | 1.74 | 1.74 | 1.74 | 0.00 | 1.74 | 0.00 | 0.00 |
| Y (parts by mass) [inequality(1)] | 4.0 | 4.0 | 3.8 | 4.0 | 0.9 | 0.7 | 5.2 | 4.0 | 14.6 | 14.6 | 2.6 |
| Thickness of member (mm) [T] | 7.0 | 5.0 | 7.0 | 7.0 | 7.0 | 5.0 | 7.0 | 7.0 | 7.0 | 7.0 | 20.0 |
| $B/(Y \times T) \times 10^4$ [inequality (2)] | 623 | 872 | 655 | 125 | 2657 | 4728 | 479 | 0 | 171 | 0 | 0 |
| Durability index | 125 | 138 | 135 | 110 | 140 | 145 | 126 | 88 | 100 | 75 | 78 |

Table 2

| (Rubber member: sidewall) | | | | | |
|---|---|---|---|---|---|
| | Example | | | | Comparative example |
| | 2-1 | 2-2 | 2-3 | 2-4 | 2-1 |
| Compounding (parts by mass) | | | | | |
| IR-based rubber | - | 20 | - | - | - |
| SBR1 | 50 | 50 | 50 | - | 50 |
| SBR2 | - | - | - | - | - |
| SBR3 | - | - | - | 50 | - |
| BR | 50 | 30 | 50 | 50 | 50 |
| BDB | 25 | 25 | 5 | 25 | - |
| CB | 10 | 10 | 10 | 10 | 10 |
| Silica | 60 | 60 | 60 | 60 | 60 |
| Silane coupling agent | 5.0 | 5.0 | 5.0 | 5.0 | 5.0 |
| Wax | 1.2 | 1.2 | 1.2 | 1.2 | 1.2 |
| Antioxidant 1 | 2.5 | 2.5 | 2.5 | 2.5 | 2.5 |
| Antioxidant 2 | 1.0 | 1.0 | 1.0 | 1.0 | 1.0 |
| Zinc oxide | 3.0 | 3.0 | 3.0 | 3.0 | 3.0 |
| Stearic acid | 2.5 | 2.5 | 2.5 | 2.5 | 2.5 |
| Radical initiator | 0.1 | 0.1 | 0.1 | 0.1 | - |
| Vulcanization accelerator 1 | 0.6 | 0.6 | 0.6 | 0.6 | 0.6 |
| Vulcanization accelerator 2 | 0.6 | 0.6 | 0.6 | 0.6 | 0.6 |
| Vulcanization accelerator 3 | 0.6 | 0.6 | 0.6 | 0.6 | 0.6 |

(continued)

| (Rubber member: sidewall) | | | | | |
|---|---|---|---|---|---|
| | Example | | | | Comparative example |
| | 2-1 | 2-2 | 2-3 | 2-4 | 2-1 |
| Compounding (parts by mass) | | | | | |
| Sulfur | 1.0 | 1.0 | 1.0 | 1.0 | 1.0 |
| Content of boron (parts by mass) [B] | 1.74 | 1.74 | 0.35 | 1.74 | 0.00 |
| Y (parts by mass) [inequality(1)] | 4.0 | 3.8 | 4.0 | 0.94 | 4.0 |
| Thickness of member (mm) [T] | 4.0 | 4.0 | 4.0 | 4.0 | 4.0 |
| $B/(Y \times T) \times 10^4$ [inequality (2)] | 1090 | 1147 | 218 | 4649 | 0 |
| Durability index | 120 | 125 | 115 | 130 | 100 |

Table 3

| (Rubber member: cap tread) | | | | | |
|---|---|---|---|---|---|
| | Example | | | | Comparative example |
| | 3-1 | 3-2 | 3-3 | 3-4 | 3-1 |
| Compounding (parts by mass) | | | | | |
| IR-based rubber | - | 20 | - | - | - |
| SBR1 | 50 | 50 | 50 | - | 50 |
| SBR2 | - | - | - | - | - |
| SBR3 | - | - | - | 50 | - |
| BR | 50 | 30 | 50 | 50 | 50 |
| Pyridine borane | 10 | 10 | 1 | 10 | - |
| CB | 10 | 10 | 10 | 10 | 10 |
| Silica | 60 | 60 | 60 | 60 | 60 |
| Silane coupling agent | 5.0 | 5.0 | 5.0 | 5.0 | 5.0 |
| Wax | 2.0 | 2.0 | 2.0 | 2.0 | 2.0 |
| Antioxidant 1 | 2.5 | 2.5 | 2.5 | 2.5 | 2.5 |
| Antioxidant 2 | 1.0 | 1.0 | 1.0 | 1.0 | 1.0 |
| Zinc oxide | 2.0 | 2.0 | 2.0 | 2.0 | 2.0 |
| Stearic acid | 2.0 | 2.0 | 2.0 | 2.0 | 2.0 |
| Vulcanization accelerator 1 | 0.6 | 0.6 | 0.6 | 0.6 | 0.6 |
| Vulcanization accelerator 2 | 0.6 | 0.6 | 0.6 | 0.6 | 0.6 |
| Vulcanization accelerator 3 | 0.6 | 0.6 | 0.6 | 0.6 | 0.6 |
| Sulfur | 1.0 | 1.0 | 1.0 | 1.0 | 1.0 |
| Content of boron (parts by mass) [B] | 0.93 | 0.93 | 0.09 | 0.93 | 0.00 |
| Y (parts by mass) [inequality(1)] | 4.0 | 3.8 | 4.0 | 0.94 | 4.0 |
| Thickness of member (mm) [T] | 7.0 | 7.0 | 7.0 | 7.0 | 7.0 |
| $B/(Y \times T) \times 10^4$ [inequality (2)] | 332 | 350 | 33 | 1418 | 0 |
| Durability index | 120 | 122 | 102 | 110 | 100 |

The reference Comparative examples in Tables 1 to 3 described above are as follows:

Table 1: Comparative example 1-2
Table 2: Comparative example 2-1
Table 3: Comparative example 3-1

REFERENCE SIGNS LIST

1. Cap tread
2. Base tread
3. Inner liner
4. Sidewall
5. Clinch apex
6. Wing

CL. Tire center line
R. Rim
T1. Thickness of cap tread
T2. Thickness of base tread
T3. Thickness of inner liner
T4. Thickness of sidewall
T5. Thickness of clinch apex
T6. Thickness of wing

## Claims

1. A tire comprising at least one rubber member composed of a cross-linked rubber comprising a rubber component and a cross-linking agent,

   wherein the cross-linked rubber has a boron atom-containing group, wherein the rubber component comprises a polymer comprising, as repeating units, -CH=CH- unit, $-CH_2-CH\ (-CH=CH_2)-$ unit, and $-CH_2-CHPh-$ unit (provided that Ph represents a phenyl group),
   wherein a content of the polymer in the rubber component is 50% by mass or more, and
   wherein the tire simultaneously satisfies the following relational inequalities (1) and (2), where B represents a boron content, in parts by mass, in the cross-linked rubber based on 100 parts by mass of the rubber component, Y represents a content, in parts by mass, of $-CH_2-CH(-CH=CH_2)-$ unit in the rubber component based on 100 parts by mass of the rubber component, and T represents a thickness, in mm, of the rubber member:

$$(1)\ Y<6.0,$$

$$(2)\ B/(Y\times T)\times 10^4>1.$$

2. The tire of claim 1, wherein the thickness T of the rubber member composed of the cross-linked rubber is 5 mm or less.

3. The tire of claim 1 or 2, wherein the rubber component further comprises an isoprene-based rubber.

4. The tire of any one of claims 1 to 3, wherein the right side in the inequality (1) is 5.0, preferably 4.5.

5. The tire of any one of claims 1 to 3, wherein the right side in the inequality (1) is 4.2, preferably 4.0, more preferably 3.5, further preferably 3.0, further preferably 2.5, further preferably 2.0, further preferably 1.5.

6. The tire of any one of claims 1 to 5, wherein the right side in the inequality (2) is 100, preferably 400, more preferably 800, further preferably 1000, further preferably 2000, further preferably 4000.

7. The tire of any one of claims 1 to 6, wherein the left side in the inequality (2) is less than 5000.

8. The tire of any one of claims 1 to 7, wherein the polymer further comprises $-CH_2-CH_2-CH_2-CH_2-$ unit and/or $-CH_2-CH\ (-CH_2-CH_3)-$ unit.

9. The tire of any one of claims 1 to 8, wherein the cross-linked rubber has a cross-linking site bonded via boron-oxygen

bond.

10. The tire of claim 9, wherein the cross-linking site comprises a group having a diboronic acid ester skeleton unit.

11. The tire of any one of claims 1 to 10, wherein the polymer is a modified polymer modified with a complex of a nitrogen-containing aromatic compound and a borane compound.

12. The tire of claim 11, wherein the nitrogen-containing aromatic compound is at least one selected from pyridine, quinoxaline, pyrrole, pyrazine, pyrimidine, pyridazine, thiazole, oxazole, imidazole, pyrazole, isoxazole, isothiazole, triazole, furazan, oxadithiazole, thiadiazole, dioxazole, and dithiazole.

13. The tire of any one of claims 1 to 12, wherein the rubber member is one selected from a cap tread, a base tread, a sidewall, a clinch apex, a wing, and an inner liner.

FIG.1

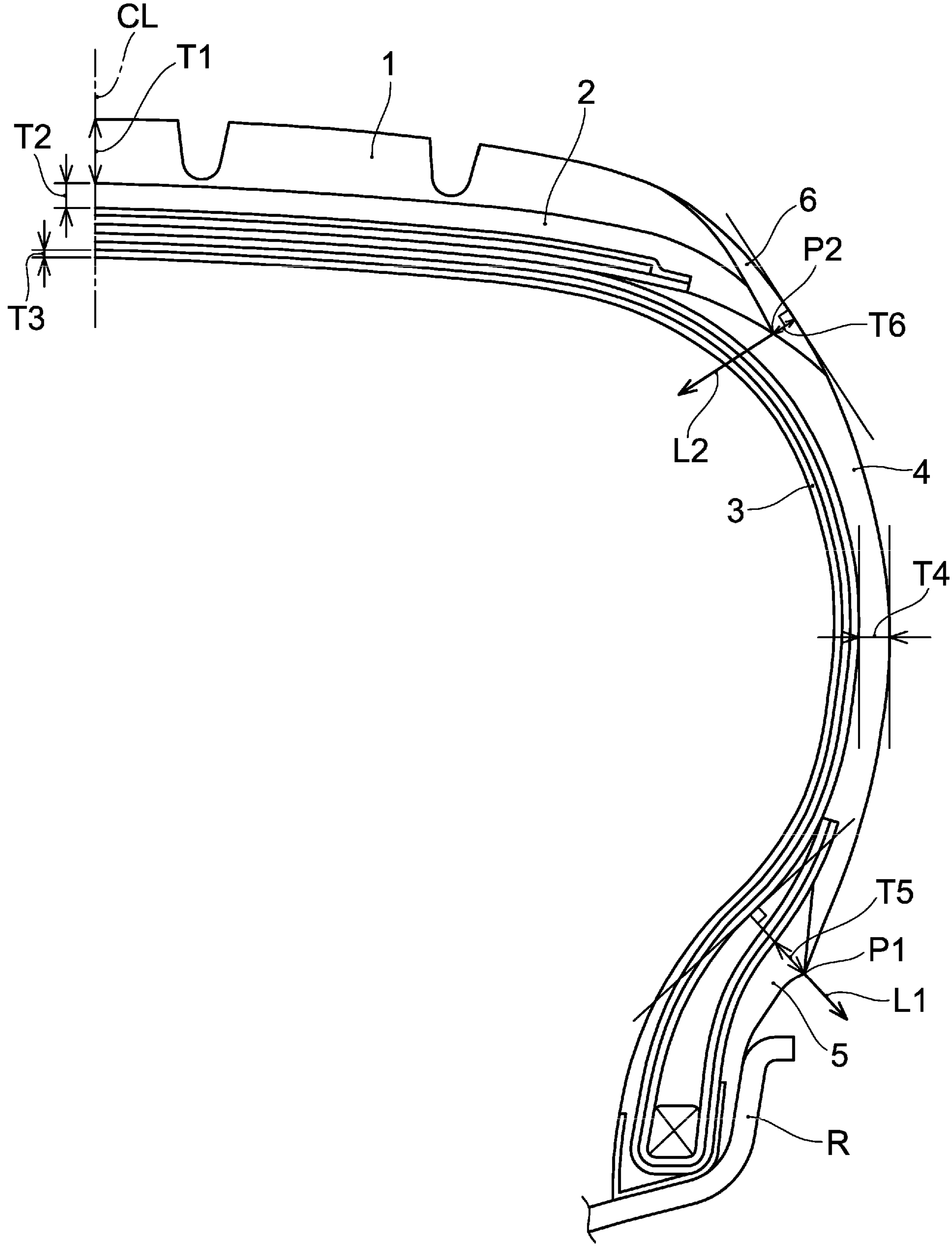

Europäisches Patentamt
European Patent Office
Office européen des brevets

# EUROPEAN SEARCH REPORT

Application Number
EP 25 18 2039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 382 556 A1 (BRIDGESTONE CORP [JP]) 12 June 2024 (2024-06-12) * claims * * paragraphs [0018] - [0019]; examples 1-1-1-4 * ----- | 1-13 | INV. B60C1/00 C08L9/06 C08K5/55 |
| A,D | WO 2023/013333 A1 (BRIDGESTONE CORP [JP]) 9 February 2023 (2023-02-09) * claims; examples * ----- | 1-13 | |
| A | JP 2023 120150 A (SUMITOMO RUBBER IND) 29 August 2023 (2023-08-29) * claims; examples * * paragraph [0004] * ----- | 1-13 | |

TECHNICAL FIELDS SEARCHED (IPC)

C08L
C08K
B60C

The present search report has been drawn up for all claims

| Place of search | Date of completion of the search | Examiner |
|---|---|---|
| Munich | 22 October 2025 | Baekelmans, Didier |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 18 2039

This annex lists the patent family members relating to the patent documents cited in the above-mentioned European search report. The members are as contained in the European Patent Office EDP file on
The European Patent Office is in no way liable for these particulars which are merely given for the purpose of information.

22-10-2025

| Patent document cited in search report | Publication date | Patent family member(s) | Publication date |
|---|---|---|---|
| EP 4382556 A1 | 12-06-2024 | CN 117715958 A | 15-03-2024 |
| | | EP 4382556 A1 | 12-06-2024 |
| | | JP 2023023662 A | 16-02-2023 |
| | | US 2024327548 A1 | 03-10-2024 |
| | | WO 2023013335 A1 | 09-02-2023 |
| WO 2023013333 A1 | 09-02-2023 | CN 117751156 A | 22-03-2024 |
| | | EP 4382552 A1 | 12-06-2024 |
| | | JP 2023023660 A | 16-02-2023 |
| | | US 2024327547 A1 | 03-10-2024 |
| | | WO 2023013333 A1 | 09-02-2023 |
| JP 2023120150 A | 29-08-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2023013333 A
- WO 2016039005 A
- EP 3427975 A
- JP 6856781 B
- EP 3173251 A
- JP 2009002594 A


### Non-patent literature cited in the description


- *Rubber Chemistry and Technology*, 2012, vol. 85 (3), 408-449
- A comparison of surface morphology and chemistry of pyrolytic carbon blacks with commercial carbon blacks. *Powder Technology*, 2005, vol. 160, 190-193
- *Akita Prefectural University Web Journal B*, 2019, vol. 6, 216-222